# EUROPEAN PATENT APPLICATION

(11) **EP 4 837 770 A1**
(43) Date of publication of application: **11.11.2026**
(21) Application number: 24921640.9
(22) Date of filing: 18.11.2024
(51) Int. Cl.: B60L 15/20

(54) **TORQUE CONTROL METHOD AND APPARATUS, AND VEHICLE**

(30) Priority: 31.01.2024 CN 202410139843
(71) Applicant: Yinwang Intelligent Technologies Co., Ltd., Shenzhen, Guangdong 518110 (CN)
(72) Inventor: NI, Runyu, Shenzhen, Guangdong 518129 (CN); CAO, Zhongcheng, Shenzhen, Guangdong 518129 (CN)
(74) Representative: Gill Jennings & Every LLP
(86) International application number: PCT/CN2024/132716
(87) International publication number: WO 2025/161618

(57) **Abstract**

A torque control method, a torque control apparatus, a vehicle, a chip system, a computer-readable medium, and a computer program product are provided. To reduce a slip rate, the method includes: obtaining detection data (S401); predicting, based on the detection data, that a first wheel arrives at a first location after a first time period, where a geomorphological feature of the first location satisfies a preset condition (S402); and adjusting current first torque of the first wheel to second torque, and adjusting current third torque of a second wheel to fourth torque in the first time period, where a first absolute value of a difference between the first torque and the second torque is equal to a second absolute value of a difference between the third torque and the fourth torque, and the first wheel and the second wheel correspond to different actuators (S403).

## Description

This application claims priority to Chinese Patent Application No. 202410139843.3, filed with the China National Intellectual Property Administration on January 31, 2024 and entitled "TORQUE CONTROL METHOD AND APPARATUS, AND VEHICLE", which is incorporated herein by reference in its entirety.

### TECHNICAL FIELD

This application relates to the field of vehicle control technologies, and in particular, to a torque control method and apparatus, and a vehicle.

### BACKGROUND

In a driving process of a vehicle, when encountering a sudden change in road conditions (for example, a speed bump or a road joint), a driver usually decelerates in advance and coasts through, and the vehicle triggers energy regeneration. In a process of passing over a location of the sudden change of the road condition, a wheel inevitably experiences a brief lift-off, resulting in insufficient vertical force and consequently a high slip rate. In this case, a drag torque control (drag torque control, DTC) system reduces the slip rate by weakening regeneration strength through increasing negative torque of the wheel.

However, the increase in the negative torque of the wheel leads to insufficient vehicle braking force. In this case, after the wheel makes contact with the ground again, the vehicle lurches/surges forward. Unexpected deceleration is likely to make the driver nervous, causing a traffic accident.

### SUMMARY

To resolve the foregoing technical problem, this application provides a torque control method and apparatus, and a vehicle. According to the technical solution provided in this application, a wheel that is to pass over a sudden-change location is predicted, and torque transfer between different wheels is completed before the wheel passes over the sudden-change location, to reduce a slip rate and avoid a decrease in vehicle braking force. In this case, after the wheel makes contact with the ground again upon passing over the sudden-change location, the vehicle does not lurch/surge forward.

To achieve the foregoing technical objective, this application provides the following technical solutions.

According to a first aspect, a torque control method is provided. The method includes: obtaining detection data; predicting, based on the detection data, that a first wheel arrives at a first location after a first time period, where a geomorphological feature of the first location satisfies a preset condition; and adjusting current first torque of the first wheel to second torque, and adjusting current third torque of a second wheel to fourth torque in the first time period, where a first absolute value of a difference between the first torque and the second torque is equal to a second absolute value of a difference between the third torque and the fourth torque, and the first wheel and the second wheel correspond to different actuators.

The first location is a sudden-change location on a road surface, for example, a speed bump.

In this way, a time point at which a wheel is to pass over a sudden-change location is predicted, and torque transfer between different wheels is completed before the time point, so that a slip rate in a process in which the wheel passes over the sudden-change location is reduced, and a vehicle does not lurch/surge forward after the wheel makes contact with the ground again upon leaving the sudden-change location. In this way, a driver and a passenger pass over the sudden-change location imperceptibly, and this improves comfort experience of the driver and the passenger.

According to the first aspect, the method further includes: in a process in which the first wheel passes over the first location, determining, whether a slip rate of the first wheel is greater than a target value; and if the slip rate of the first wheel is greater than the target value, adjusting the second torque of the first wheel to fifth torque, and adjusting the fourth torque of the second wheel to sixth torque, where a third absolute value of a difference between the second torque and the fifth torque is equal to a fourth absolute value of a difference between the fourth torque and the sixth torque.

In this way, torque transfer can be completed before the wheel leaves the sudden-change location, to ensure stability of the vehicle braking force when the slip rate is reduced. In addition, in a process in which the wheel passes over the sudden-change location, if the slip rate increases, a vehicle control unit may also adaptively perform torque transfer, to reduce the slip rate, and ensure stability of the vehicle braking force through torque transfer between different wheels. In this way, traveling stability of the vehicle can be ensured before the vehicle passes over the sudden-change location, in the process of passing over the sudden-change location, and after the vehicle passes over the sudden-change location, thereby improving comfort experience of the driver and the passenger.

According to any one of the first aspect or the foregoing implementations of the first aspect, adjusting the current first torque of the first wheel to the second torque, and adjusting the current third torque of the second wheel to the fourth torque in the first time period include: as time changes in the first time period, adjusting the current first torque of the first wheel to the second torque based on a first torque transfer curve, and adjusting the current third torque of the second wheel to the fourth torque based on a second torque transfer curve, where an adjustment direction of the first torque transfer curve corresponds oppositely to an adjustment direction of the second torque transfer curve.

Optionally, corresponding oppositely of the adjustment direction indicates that negative torque of a wheel is decreased when negative torque of another wheel is increased. In this way, torque transfer between different wheels ensures that vehicle braking torque remains unchanged or approximately remains unchanged, so that the vehicle does not lurch or surge forward. In addition, in a torque transfer process, stable torque transfer is performed based on a torque transfer curve, to ensure traveling stability of the vehicle in the torque transfer process.

According to any one of the first aspect or the foregoing implementations of the first aspect, before predicting, based on the detection data, that the first wheel arrives at the first location after the first time period, the method further includes: determining, based on the detection data, that a current scenario is an energy regeneration scenario, where the energy regeneration scenario includes a deceleration scenario in response to a user operation or an automatic deceleration scenario.

In this way, when determining that the vehicle is in the energy regeneration scenario, the vehicle control unit determines whether the wheel subsequently passes over the sudden-change location, to stabilize, through torque control, the vehicle braking force in a process in which the vehicle passes over the sudden-change location.

According to any one of the first aspect or the foregoing implementations of the first aspect, after obtaining the detection data, the method further includes: obtaining a torque transfer amount of the first wheel based on at least one of a vehicle speed, a braking force magnitude, and a road surface sudden change degree corresponding to the first location that are indicated by the detection data, where the torque transfer amount is equal to the first absolute value.

For example, a faster vehicle speed indicates a larger torque transfer amount. For another example, a larger braking force indicates a larger braking force lost when the vehicle passes over the first location, and a larger torque transfer amount is required. For another example, a larger road surface sudden change degree indicates a larger wheel lift-off height, and a larger torque transfer amount is required.

According to any one of the first aspect or the foregoing implementations of the first aspect, predicting, based on the detection data, that the first wheel arrives at the first location after the first time period includes: predicting, based on at least one of a vehicle wheelbase, the vehicle speed, a vehicle acceleration, a vehicle traveling direction, and a vehicle track width that are indicated by the detection data, that the first wheel arrives at the first location after the first time period.

In this way, the vehicle control unit obtains, based on the detection data, a time point at which the first wheel is to arrive at the first location, to complete torque transfer between different wheels before the time point, and ensure traveling stability of the vehicle.

According to any one of the first aspect or the foregoing implementations of the first aspect, a first actuator is configured to control torque of the first wheel, a second actuator is configured to control torque of the second wheel, and after obtaining the detection data, the method further includes: when the first actuator is different from the second actuator, pre-activating an actuator with slow torque compensation in the first actuator or the second actuator.

According to any one of the first aspect or the foregoing implementations of the first aspect, the first actuator or the second actuator is any one of an electronic hydraulic brake, an electronic mechanical brake, or a drive motor.

For example, long response time is required after an actuator is triggered to start. In this case, if the actuator is triggered to perform torque transfer after the sudden-change location is detected, it may be difficult to complete torque transfer before the wheel leaves the first location. Alternatively, if the first actuator is different from the second actuator, and a response time difference between the first actuator and the second actuator is excessively large, it is difficult to ensure that absolute values of torque transfer amounts of wheels corresponding to the two actuators are the same in the torque transfer process. Consequently, the vehicle braking torque changes, and driving experience of a user is affected. Therefore, the vehicle control unit can pre-activate an actuator with slow torque compensation, so that in a subsequent torque transfer process, the activated actuator can respond to torque transfer quickly.

According to any one of the first aspect or the foregoing implementations of the first aspect, after obtaining the detection data, the method further includes: determining, based on the detection data, that the first wheel is to arrive at the first location in a process in which the second wheel passes over the first location or before the second wheel passes over the first location.

In this way, the vehicle control unit determines, based on the detection data, that the wheel is to pass over the sudden-change location, to determine that a torque transfer condition is satisfied, and torque control is to be started. This avoids a decrease in the vehicle braking force due to torque control in a process in which the wheel passes over the sudden-change location subsequently.

According to a second aspect, an embodiment of this application provides a torque control apparatus. The apparatus includes a processor and a memory. The memory is coupled to the processor, and the memory is configured to store computer-readable instructions. When the processor reads the computer-readable instructions from the memory, the torque control apparatus performs the following operations: obtaining detection data; predicting, based on the detection data, that a first wheel arrives at a first location after a first time period, where a geomorphological feature of the first location satisfies a preset condition; and adjusting current first torque of the first wheel to second torque, and adjusting current third torque of a second wheel to fourth torque in the first time period, where a first absolute value of a difference between the first torque and the second torque is equal to a second absolute value of a difference between the third torque and the fourth torque, and the first wheel and the second wheel correspond to different actuators.

According to the second aspect, when the processor reads the computer-readable instructions from the memory, the torque control apparatus further performs the following operations: in a process in which the first wheel passes over the first location, determining, whether a slip rate of the first wheel is greater than a target value; and if the slip rate of the first wheel is greater than the target value, adjusting the second torque of the first wheel to fifth torque, and adjusting the fourth torque of the second wheel to sixth torque, where a third absolute value of a difference between the second torque and the fifth torque is equal to a fourth absolute value of a difference between the fourth torque and the sixth torque.

According to any one of the second aspect or the foregoing implementations of the second aspect, adjusting the current first torque of the first wheel to the second torque, and adjusting the current third torque of the second wheel to the fourth torque in the first time period include: as time changes in the first time period, adjusting the current first torque of the first wheel to the second torque based on a first torque transfer curve, and adjusting the current third torque of the second wheel to the fourth torque based on a second torque transfer curve, where an adjustment direction of the first torque transfer curve corresponds oppositely to an adjustment direction of the second torque transfer curve.

According to any one of the second aspect or the foregoing implementations of the second aspect, when the processor reads the computer-readable instructions from the memory, the torque control apparatus further performs the following operation: determining, based on the detection data, that a current scenario is an energy regeneration scenario, where the energy regeneration scenario includes a deceleration scenario in response to a user operation or an automatic deceleration scenario.

According to any one of the second aspect or the foregoing implementations of the second aspect, when the processor reads the computer-readable instructions from the memory, the torque control apparatus further performs the following operation: obtaining a torque transfer amount of the first wheel based on at least one of a vehicle speed, a braking force magnitude, and a road surface sudden change degree corresponding to the first location that are indicated by the detection data, where the torque transfer amount is equal to the first absolute value.

According to any one of the second aspect or the foregoing implementations of the second aspect, predicting, based on the detection data, that the first wheel arrives at the first location after the first time period includes: predicting, based on at least one of a vehicle wheelbase, the vehicle speed, a vehicle acceleration, a vehicle traveling direction, and a vehicle track width that are indicated by the detection data, that the first wheel arrives at the first location after the first time period.

According to any one of the second aspect or the foregoing implementations of the second aspect, a first actuator is configured to control torque of the first wheel, and a second actuator is configured to control torque of the second wheel. When the processor reads the computer-readable instructions from the memory, the torque control apparatus further performs the following operation: when the first actuator is different from the second actuator, pre-activating an actuator with slow torque compensation in the first actuator or the second actuator.

According to any one of the second aspect or the foregoing implementations of the second aspect, the first actuator or the second actuator is any one of an electronic hydraulic brake, an electronic mechanical brake, or a drive motor.

According to any one of the second aspect or the foregoing implementations of the second aspect, when the processor reads the computer-readable instructions from the memory, the torque control apparatus is further enabled to determine, based on the detection data, that the first wheel is to arrive at the first location in a process in which the second wheel passes over the first location or before the second wheel passes over the first location.

For example, the apparatus is a vehicle control unit, a vehicle, a component that is in a vehicle control unit and that can perform any one of the possible methods in any one of the foregoing aspects, or a component that is in a vehicle and that can perform any one of the possible methods in any one of the foregoing aspects.

For another example, the apparatus may alternatively be another device or a component in another device. For example, a device other than a vehicle may determine torque, and notify the vehicle of the torque.

According to a third aspect, an embodiment of this application provides a transportation means. The transportation means includes the torque control apparatus according to the second aspect.

Optionally, the transportation means includes a vehicle. For example, the vehicle may be an electric vehicle, a car, a truck, a motorcycle, a bus, a lawn mower, a recreational vehicle, a playground vehicle, a construction device, a trolley, a golf cart, a train, a handcart, or the like. This is not particularly limited in embodiments of this application.

According to a fourth aspect, an embodiment of this application provides a chip system, including at least one processor and at least one interface circuit. The at least one interface circuit is configured to: perform a transceiver function, and send instructions to the at least one processor. The at least one processor executes the instructions, so that the at least one processor performs the method according to any one of the first aspect and the implementations of the first aspect.

According to a fifth aspect, an embodiment of this application provides a computer-readable storage medium. The computer-readable storage medium includes a computer program (which may also be referred to as instructions or code). When the computer program runs on a computer, the computer is enabled to perform the method according to any one of the first aspect and the implementations of the first aspect.

According to a sixth aspect, an embodiment of this application provides a computer program product. When the computer program product runs on a computer, the computer is enabled to perform the method according to any one of the first aspect and the implementations of the first aspect.

For technical effects corresponding to the second aspect to the sixth aspect and any one of the implementations of the second aspect to the sixth aspect, refer to technical effects corresponding to the first aspect and any one of the implementations of the first aspect. Details are not described herein again.

### BRIEF DESCRIPTION OF DRAWINGS

FIG. 1(a) and FIG. 1(b) are a diagram of a torque adjustment process according to an embodiment of this application;
FIG. 2 is a diagram of a torque control system according to an embodiment of this application;
FIG. 3A is a diagram of a hardware structure of a torque control apparatus according to an embodiment of this application;
FIG. 3B is a diagram of a structure of a vehicle according to an embodiment of this application;
FIG. 4 is a schematic flowchart 1 of a torque control method according to an embodiment of this application;
FIG. 5(a) and FIG. 5(b) are a diagram 1 of a torque control scenario according to an embodiment of this application;
FIG. 6 is a diagram 2 of a torque control scenario according to an embodiment of this application;
FIG. 7 is a schematic flowchart 2 of a torque control method according to an embodiment of this application;
FIG. 8(a) and FIG. 8(b) are a diagram 3 of a torque control scenario according to an embodiment of this application;
FIG. 9(a) and FIG. 9(b) are a diagram 4 of a torque control scenario according to an embodiment of this application;
FIG. 10 is a diagram of a structure of a torque control apparatus according to an embodiment of this application; and
FIG. 11 is a diagram of a structure of a chip system according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe purposes of specific embodiments, but are not intended to limit this application. Terms "one", "a", "the", "the foregoing", "this", and "the one" of singular forms used in this specification and the appended claims of this application are intended to include expressions such as "one or more", unless otherwise specified in the context clearly. It should be further understood that, in the following embodiments of this application, "at least one" and "one or more" mean one or more (including two).

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes direct connection and indirect connection, unless otherwise specified. The terms "first" and "second" are intended only for description, and shall not be understood as an indication or implication of relative importance or an implicit indication of a quantity of indicated technical features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

In some embodiments, a multi-actuator driving system on a vehicle has features of high transmission efficiency, precise and controllable torque, and high redundancy and reliability. A plurality of actuators are used to control axle torque corresponding to each wheel, to ensure driving performance and stability of the vehicle in working conditions of road surface adhesion and a sudden-change road condition.

Torque is a special moment of force that makes an object rotate. Torque in a vehicle is a moment of force output by an engine from a crankshaft end. The torque affects acceleration performance of the vehicle. A larger torque indicates larger acceleration, a larger grade, and a larger load weight of the vehicle. The torque may reflect a load capability of the vehicle in a specific range. A unit of the torque is newton-meter (N•m).

Optionally, an actuator on the vehicle is, for example, an electronic hydraulic brake, an electronic mechanical brake, or a drive motor. For example, in a front-rear dual-motor drive system in dual-motor drive systems, a motor arrangement with one motor arranged at the front and the other at the rear is used. The motor on a front bridge of the vehicle drives two wheels on a front axle, and the motor on a rear bridge drives two wheels on a rear axle, to implement four-wheel drive control of the front and rear motors. The front-axle motor and the rear-axle motor separately output torque, to implement torque control of the front and rear axles. Driving force or braking force of the front and rear axles are properly distributed through torque control, and an adhesion limit of the vehicle is fully utilized, to improve stability and safety of the vehicle. Compared with a coaxial dual-motor rear-wheel-drive control vehicle, front-rear dual-motor four-wheel drive control can take advantages of four-wheel drive and improve vehicle maneuverability and passability through torque vector control of the front and rear motors.

It should be understood that in the dual-actuator drive system, one actuator is configured to control front axle torque, and the front axle torque represents torque of front wheels of the vehicle; and one actuator is configured to control rear axle torque, and the rear axle torque represents torque of rear wheels of the vehicle. In some examples, more or fewer actuators may be configured in the vehicle to control axle torque. For example, for a four-wheel vehicle, four actuators are configured to control torque of different wheels.

Optionally, the sudden-change road condition includes, for example, a sudden-change location that satisfies a preset geomorphic feature, such as a speed bump, a road joint, or a road surface bump.

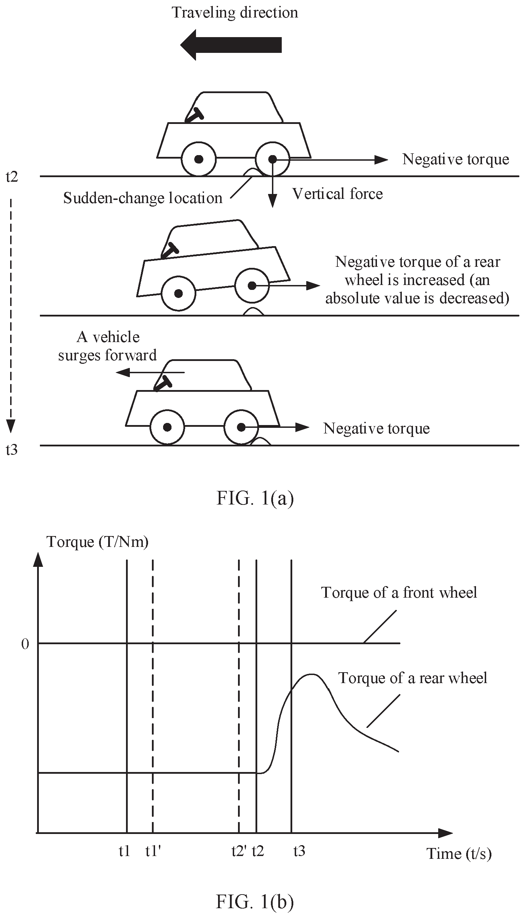

In some examples, in a driving process of the vehicle, at a sudden-change location, a driver usually decelerates in advance and coasts through, and the vehicle triggers energy regeneration. For example, as shown in FIG. 1(a), in a driving process, the driver finds a sudden-change location in front of the vehicle, and triggers the vehicle to decelerate. An actuator of the vehicle drives torque of a rear wheel to negative torque. It should be understood that when the vehicle travels on a road surface, a wheel adheres to the ground to generate a vertical force, and a part of the negative torque is used to resist the vertical force. Then, in a process in which the rear wheel passes over the sudden-change location, the rear wheel inevitably experiences a brief lift-off, resulting in insufficient vertical force and consequently a high slip rate. In this case, a drag torque control (drag torque control, DTC) system reduces the slip rate by weakening regeneration strength through increasing the negative torque of the wheel. As shown in FIG. 1(b), the rear wheel enters the sudden-change location at a time point t2, and leaves the sudden-change location at a time point t3. In a time period from the time point t2 to the time point t3, the DTC implements torque control on a rear axle by using an actuator, to control the negative torque of the rear wheel to increase. The increase in the negative torque of the rear wheel actually decreases an absolute value of the torque, resulting in insufficient vehicle braking force. As shown in FIG. 1(a), after the rear wheel makes contact with the ground again, the vehicle lurches/surges forward. Unexpected deceleration is likely to make the driver nervous, causing a traffic accident.

In some examples, regeneration strength of a single wheel is limited, to suppress forward lurch/surge of the vehicle. For example, unevenness of the sudden-change location is obtained through road condition identification, regeneration power adjustment coefficients (negatively correlated) are determined, and regeneration torque of motors is adjusted. For another example, time-based filtering is used to control exit of electric braking force, to avoid insufficient braking force caused by triggering of the DTC/an anti-lock brake system (antilock brake system, ABS). For still another example, when passing over the sudden-change location, under an ABS trigger condition, a motor exits energy regeneration only when a rotational speed of the motor is lower than a value, to delay exit of electric braking force. However, in these solutions, the wheel regeneration strength is adjusted in a process of passing over the sudden-change location. However, in a process of passing over the sudden-change location, a vertical force loss caused by a wheel lift-off cannot be avoided, and the vehicle braking force cannot be adjusted effectively in the foregoing example manners.

In this case, embodiments of this application provide a torque control method. A wheel that is to pass over a sudden-change location is predicted, and torque transfer between different wheels is completed before the wheel passes over the sudden-change location, to reduce a slip rate and avoid a decrease in vehicle braking force. In this case, after the wheel makes contact with the ground again upon passing over the sudden-change location, the vehicle does not lurch/surge forward.

A torque control apparatus to which the torque control method provided in embodiments of this application is applied may be various vehicles or modules included in various vehicles. For example, the vehicle is an electric vehicle, a new energy vehicle, a car, a truck, a motorcycle, a bus, a recreational vehicle, a playground vehicle, a construction device, or a trolley. This is not particularly limited in embodiments of this application. The torque control apparatus may be powered by gasoline, diesel, electricity, solar energy, hydrogen energy, and the like.

The following describes the technical solutions in embodiments of this application with reference to the accompanying drawings in embodiments of this application. It is clear that the described embodiments are merely a part rather than all of embodiments of this application.

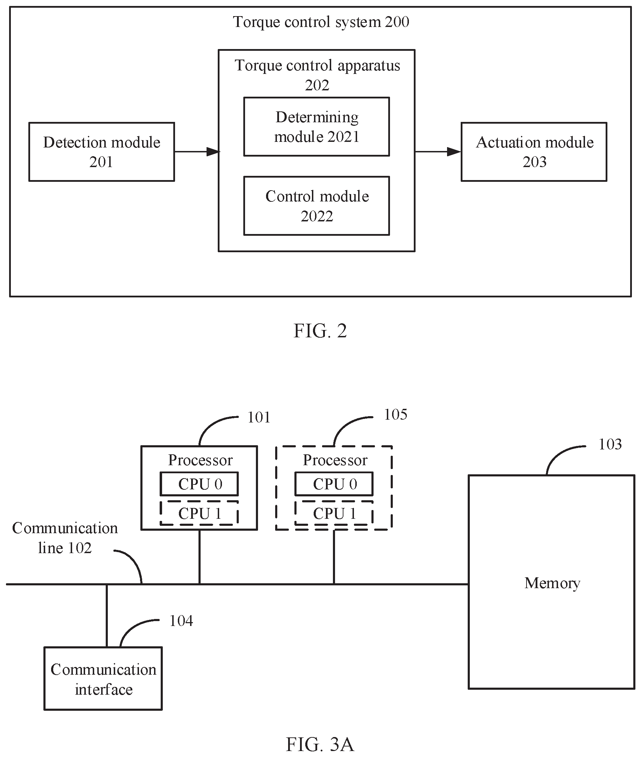

FIG. 2 shows a torque control system 200 according to an embodiment of this application. As shown in FIG. 2, the torque control system 200 includes a detection module 201, a torque control apparatus 202, and an actuation module 203. The detection module 201, the torque control apparatus 202, and the actuation module 203 are connected and communicate with each other, and the torque control apparatus 202 includes a determining module 2021 and a control module 2022.

In some examples, the detection module 201 is configured to obtain detection data, where the detection data indicates a status of a vehicle. Optionally, the detection data includes, for example, accelerator pedal data, brake pedal data, vehicle traveling data, environment data, and vehicle status estimation data. The accelerator pedal data includes, for example, data related to an acceleration intention, such as a moving distance and an opening angle of an accelerator pedal when the accelerator pedal is stepped down. The brake pedal data includes, for example, data related to a braking intention, such as an opening degree, brake push rod data, master cylinder pressure of a brake pedal. The vehicle traveling data includes, for example, a motor rotation speed, a wheel speed, and wheel acceleration. The environment data includes, for example, identification data of a sudden-change location. The vehicle status estimation data includes, for example, a vehicle speed and a wheel slip rate.

The detection module 201 includes a vehicle sensor, and the vehicle sensor is usually arranged inside the vehicle. The vehicle sensor may be configured to detect the status of the vehicle. The vehicle sensor may be any one of a photoelectric speed sensor, a magnetoelectric speed sensor, or a Hall speed sensor. This is not limited herein.

It should be understood that the foregoing description of the detection module 201 is merely an example for description, and a specific form and an implementation of the detection module 201 are not specifically limited in embodiments of this application.

Refer to FIG. 2. The torque control apparatus 202 shown in FIG. 2 may be configured to indicate, based on the detection data received from the detection module 201, the actuation module 203 to perform torque adjustment.

In some examples, the torque control apparatus 202 may include the determining module 2021 and the control module 2022.

The determining module 2021 is configured to determine whether the vehicle currently satisfies a torque transfer condition. Optionally, the torque transfer condition includes, for example, determining one or more of the following based on the detection data: the vehicle is to pass over a sudden-change location, the vehicle is in an energy regeneration working condition, and the vehicle speed satisfies a preset threshold.

The control module 2022 is configured to trigger a torque transfer process of a wheel when the vehicle satisfies the torque transfer condition. The torque transfer process includes: before the wheel passes over the sudden-change location, increasing negative torque of the wheel to reduce a slip rate of the wheel; and in this process, decreasing negative torque of another wheel to implement torque transfer between the different wheels, so that a sum of torque of the vehicle remains unchanged. In this way, through torque transfer, the slip rate can be reduced in the process in which the wheel passes over the sudden-change location, and after the wheel passes over the sudden-change location, forward surge of the vehicle caused by insufficient vehicle braking force does not occur.

In some examples, in the process in which the wheel passes over the sudden-change location, the determining module 2021 may also determine whether the slip rate of the wheel changes to exceed a target value. For example, when the slip rate exceeds the target value, to reduce the slip rate, the control module 2022 may also adjust negative torque of different wheels through torque transfer, to reduce the slip rate of the wheel that passes over the sudden-change location, and avoid out-of-control of vehicle traveling.

In some examples, the actuation module 203 is configured to receive an instruction sent by the torque control apparatus 202, and adjust torque of different wheels. For example, the actuation module 203 includes a motor arranged on a front bridge of the vehicle to drive two wheels on a front axle, and a motor arranged on a rear bridge to drive two wheels on a rear axle. In this case, when a rear wheel is to pass over the sudden-change location, in response to the instruction sent by the torque control apparatus 202, the rear-axle motor drives the two rear wheels to increase negative torque, and the front-axle motor drives the two front wheels to decrease negative torque.

Optionally, the torque control apparatus 202 may be a server. For example, the torque control apparatus 202 may be a server in an intelligent transportation system, for example, a physical server or a cloud server. This is not limited in embodiments of this application.

For example, FIG. 3A is a diagram of a hardware structure of a torque control apparatus according to an embodiment of this application. The torque control apparatus includes at least one processor 101, a communication line 102, a memory 103, and at least one communication interface 104.

The processor 101 may be a general purpose CPU, a microprocessor, an ASIC, or one or more integrated circuits used to control program execution of the solutions of this application.

The communication line 102 may include a path for transmitting information between the foregoing components.

The communication interface 104 is configured to communicate with another apparatus. In this embodiment of this application, the communication interface 104 may be a module, a circuit, a bus, an interface, a transceiver, or another apparatus that can implement a communication function. Optionally, when the communication interface is the transceiver, the transceiver may be an independently disposed transmitter, and the transmitter may be configured to send information to another apparatus. Alternatively, the transceiver may be an independently disposed receiver, and is configured to receive information from another apparatus. Alternatively, the transceiver may be a component that integrates information sending and receiving functions. A specific implementation of the transceiver is not limited in embodiments of this application.

The memory 103 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, or the like), a magnetic disk storage medium, another magnetic storage device, or any other medium that can carry or store expected program code in a form of instruction or data structure and that can be accessed by a computer. The memory 103 may exist independently, and is connected to the processor 101 through the communication line 102. The memory 103 may alternatively be integrated with the processor 101.

The memory 103 is configured to store computer-executable instructions used to implement the solutions of this application. The processor 101 is configured to execute the computer-executable instructions stored in the memory 103, to implement the methods provided in the following embodiments of this application.

Optionally, the computer-executable instructions in embodiments of this application may also be referred to as application code, instructions, a computer program, or another name. This is not specifically limited in embodiments of this application.

During specific implementation, in an embodiment, the processor 101 may include one or more CPUs, for example, a CPU 0 and a CPU 1 in FIG. 3A.

During specific implementation, in an embodiment, the torque control apparatus may include a plurality of processors, for example, the processor 101 and a processor 105 in FIG. 3A. Each of the processors may be a single-core (single-CPU) processor, or may be a multi-core (multi-CPU) processor. The processor herein may be one or more devices, circuits, and/or processing cores configured to process data (for example, computer program instructions).

The torque control apparatus may be a general-purpose apparatus or a dedicated apparatus. A type of the torque control apparatus is not limited in embodiments of this application.

It may be understood that the structure shown in this embodiment of this application does not constitute a specific limitation on the torque control apparatus. In some other embodiments of this application, the torque control apparatus may include more or fewer components than those shown in the figure, or some components may be combined, or some components may be split, or components are arranged in different manners. The components shown in the figure may be implemented by hardware, software, or a combination of software and hardware.

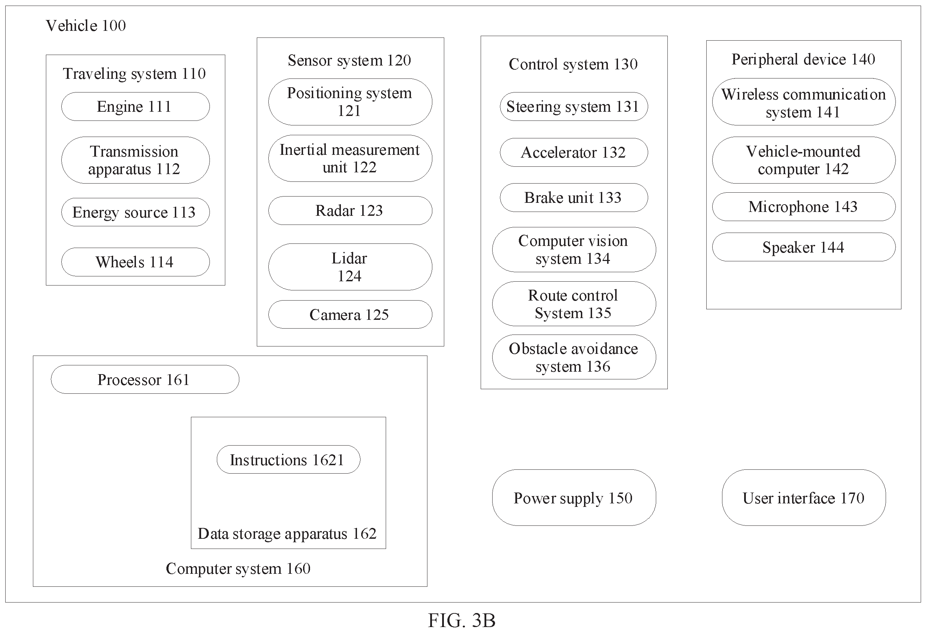

FIG. 3B is a diagram of a structure of a vehicle 100 according to an embodiment of this application. The torque control system 200 may be used in the vehicle 100.

In some embodiments, the vehicle 100 may include various subsystems, for example, a travel system 110, a sensor system 120, a control system 130, one or more peripheral devices 140, a power supply 150, a computer system 160, and a user interface 170. Optionally, the vehicle 100 may include more or fewer subsystems, and each subsystem may include a plurality of components. In addition, each subsystem and component of the vehicle 100 may be interconnected in a wired or wireless manner.

The travel system 110 may include a component that powers the vehicle 100 for movement. The engine 111 may be a motor or a combination of other types of engines. The engine 111 converts an energy source 113 into mechanical energy. Examples of the energy source 113 include solar panels, batteries, and other power sources. A transmission apparatus 112 may transmit mechanical power from the engine 111 to wheels 114.

The sensor system 120 may include several sensors that sense information about a surrounding environment of the vehicle 100. For example, the sensor system 120 may include a positioning system 121, such as a global positioning system (global positioning system, GPS), a BeiDou system or another positioning system, an inertia measurement unit (inertial measurement unit, IMU) 122, a radar 123, a lidar 124, and a camera 125.

The control system 130 controls operations of the vehicle 100 and components of the vehicle 100. The control system 130 may include various elements, including a steering system 131, an accelerator 132, a brake unit 133, a computer vision system 134, a route control system 135, and an obstacle avoidance system 136. The obstacle avoidance system 136 may also be referred to as an obstacle object avoidance system.

The vehicle 100 interacts with an external sensor, another vehicle, another computer system, or a user through the peripheral device 140. The peripheral device 140 may include a wireless communication system 141, a vehicle-mounted computer 142, a microphone 143, and/or a speaker 144.

The power supply 150 may provide power to various components of the vehicle 100.

Some or all of functions of the vehicle 100 are controlled by the computer system 160. The computer system 160 may include at least one processor 161. The processor 161 executes instructions 1621 stored in a non-transitory computer-readable medium such as a data storage apparatus 162. The computer system 160 may be a plurality of computing devices that control an individual component or a subsystem of the vehicle 100 in a distributed manner.

The processor 161 may be any conventional processor, such as a commercially available central processing unit (central processing unit, CPU). Alternatively, the processor may be a dedicated device such as an application-specific integrated circuit (application-specific integrated circuit, ASIC) or another hardware-based processor.

In some embodiments, the data storage apparatus 162 may include the instructions 1621 (for example, program logic), and the instructions 1621 may be executed by the processor 161 to perform various functions of the vehicle 100. The data storage apparatus 162 may also include additional instructions, including instructions to send data to, receive data from, interact with, and/or control one or more of the travel system 110, the sensor system 120, the control system 130, and the peripheral device 140.

In addition to the instructions 1621, the data storage apparatus 162 may further store data, such as a road map, route information, a location, a direction, a speed, and other vehicle data of the vehicle, and other information. Such information may be used by the vehicle 100 and the computer system 160 when the vehicle 100 operates in an autonomous mode, a semi-autonomous mode, and/or a manual mode.

The user interface 170 is configured to provide information to or receive information from the user of the vehicle 100.

The computer system 160 may control the functions of the vehicle 100 based on an input received from various subsystems (for example, the travel system 110, the sensor system 120, and the control system 130) and from the user interface 170.

In some embodiments, the vehicle 100 may further include a vehicle control unit (not shown in FIG. 3B). The vehicle control unit may be further described as a powertrain controller or an intelligent driving computing platform, and is a core control component of the entire vehicle. After collecting input information of each system and component, and performing corresponding determining based on the input information, the vehicle control unit controls an action of each component in the vehicle 100, to drive the vehicle 100 to travel.

Specifically, as a command and management center of the vehicle 100, main functions of the vehicle control unit include: driving torque control, optimization control of braking energy, energy management of the vehicle, maintenance and management of a controller area network (controller area network, CAN), fault diagnosis and processing, vehicle status monitoring, and the like. The vehicle control unit plays a role of controlling vehicle running. Therefore, quality of the vehicle control unit directly determines stability and safety of the vehicle.

Optionally, one or more of the foregoing components may be separately installed from or associated with the vehicle 100. For example, the data storage apparatus 162 may partially or completely exist separately from the vehicle 100. The foregoing components may be communicatively coupled together in a wired and/or wireless manner.

Optionally, the foregoing components are merely examples. In an actual application, components in the foregoing modules may be added or deleted according to an actual requirement. FIG. 3B shall not be understood as a limitation on embodiments of this application.

In some other embodiments of this application, the vehicle may further include a hardware structure and/or a software module, and implement the functions in a form of the hardware structure, the software module, or both the hardware structure and the software module. Whether a function in the foregoing functions is performed by using the hardware structure, the software module, or the combination of the hardware structure and the software module depends on particular applications and design constraints of the technical solutions.

The following describes the method provided in embodiments of this application with reference to the accompanying drawings.

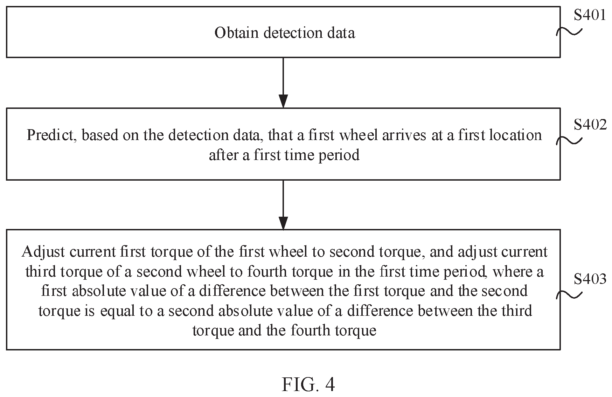

FIG. 4 is a schematic flowchart of a torque control method according to an embodiment of this application. As shown in FIG. 4, the method may include the following step S401 to step S403.

S401: A vehicle control unit obtains detection data.

The vehicle control unit is a core control component of a vehicle. The vehicle control unit obtains the detection data, makes corresponding determining and decision based on the detection data, and controls actions of components in the vehicle based on the decision, to control traveling or braking of the vehicle.

In some examples, the detection data includes, for example, accelerator pedal data, brake pedal data, vehicle traveling data, environment data, and vehicle status estimation data. The accelerator pedal data includes, for example, data related to an acceleration intention, such as a moving distance and an opening angle of an accelerator pedal when the accelerator pedal is stepped down. The brake pedal data includes, for example, data related to a braking intention, such as an opening degree, brake push rod data, master cylinder pressure of a brake pedal. The vehicle traveling data includes, for example, a motor rotation speed, a wheel speed, and wheel acceleration. The environment data includes, for example, identification data of a sudden-change location. The vehicle status estimation data includes, for example, a vehicle speed and a wheel slip rate.

For example, the detection data includes a vehicle speed, a braking force magnitude, a road surface sudden change degree, a vehicle wheelbase, a vehicle speed, vehicle acceleration, a vehicle traveling direction, and a vehicle track width.

In some embodiments, the vehicle control unit obtains real-time data monitored by various sensors in the vehicle, and determines a status of the vehicle based on the real-time data.

Optionally, the sensors of the vehicle include but are not limited to a wheel speed sensor, a steering wheel angle sensor, an accelerator pedal position sensor, a brake pedal position sensor, and the like.

For example, the vehicle control unit obtains the real-time data (such as a speed, acceleration, accelerator pedal data, and brake pedal data) monitored by a sensor (such as an accelerometer, a speed sensor, or an angle sensor) on the vehicle, the vehicle control unit calculates and determines information such as the vehicle speed, lateral acceleration of the vehicle, longitudinal acceleration of the vehicle, an accelerator pedal opening degree of the vehicle, and a brake pedal opening degree of the vehicle based on the monitored real-time data.

The longitudinal acceleration is acceleration along a front-to-back direction of the vehicle, that is, acceleration along a traveling direction of the vehicle. The longitudinal acceleration affects driving safety and comfort of the vehicle. A unit of the longitudinal acceleration is meter per second squared (m/s2).

The lateral acceleration indicates acceleration in an action direction that is perpendicular to the traveling direction of the vehicle. The lateral acceleration may be acceleration brought by a centrifugal force generated when the vehicle turns. Larger lateral acceleration indicates that the vehicle is more likely to be "thrown" away from a traveling route. A unit of the lateral acceleration is meters per second squared (m/s2).

The accelerator pedal opening degree indicates a degree of stepping on an accelerator by a user. The brake pedal opening degree indicates a degree of stepping on a brake by the user. For example, if the accelerator pedal opening degree of the vehicle is 0, it indicates that the user does not step on the accelerator at a current moment, and the vehicle does not accelerate. If the accelerator pedal opening degree of the vehicle is greater than 0, it indicates that the user steps on the accelerator at a current moment, and the vehicle is in an acceleration state. A larger accelerator pedal opening degree indicates that the user steps on the accelerator more forcibly and a speed of the vehicle is faster. Similarly, if the brake pedal opening degree of the vehicle is 0, it indicates that the user does not step on the brake at the current moment, and the vehicle does not brake. If the brake pedal opening degree of the vehicle is greater than 0, it indicates that the user steps on the brake at a current moment, and the vehicle is in a brake state. A larger brake pedal opening degree indicates that the user steps on the brake more forcibly, the user has a more urgent deceleration requirement, and a speed of the vehicle decreases faster.

In some embodiments, the vehicle control unit directly obtains status information of the vehicle from various subsystems of the vehicle. For example, for the vehicle 100 shown in FIG. 3B, the vehicle control unit obtains the detection data of the vehicle from the sensor system 120, the control system 130, and another subsystem of the vehicle 100.

S402: The vehicle control unit predicts, based on the detection data, that a first wheel arrives at a first location after a first time period.

In some embodiments, the vehicle control unit determines, based on the detection data, that a current scenario is an energy regeneration scenario. The energy regeneration scenario includes a deceleration scenario in response to a user operation or an automatic deceleration scenario.

For example, the detection data obtained by the vehicle control unit includes a brake pedal opening degree greater than 0, indicating that the user currently steps on the brake. In this case, the vehicle control unit indicates an actuator to control a wheel to increase negative torque, to reduce the vehicle speed and trigger the energy regeneration scenario. That is, the deceleration scenario in response to a user operation is triggered.

For another example, for an electric vehicle, in a traveling process, the detection data obtained by the vehicle control unit includes an accelerator pedal opening degree being 0, indicating that the user does not step on the accelerator. In this case, the vehicle control unit indicates an actuator to control a wheel to increase negative torque, to gradually reduce the vehicle speed and trigger the energy regeneration scenario. That is, the automatic deceleration scenario is triggered.

For another example, in an autonomous driving scenario, the vehicle control unit automatically controls, based on a current driving status, a wheel to increase negative torque, to reduce the vehicle speed, and trigger the energy regeneration scenario. That is, the automatic deceleration scenario is triggered.

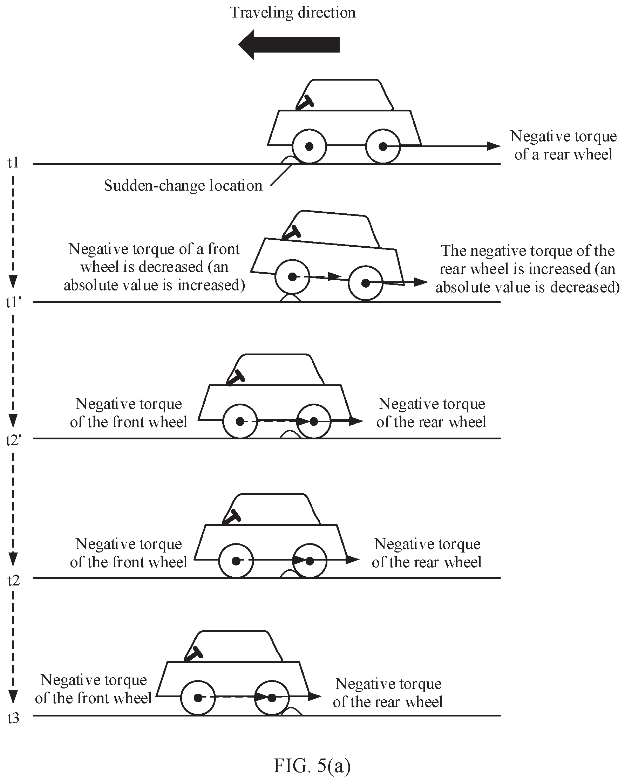

For example, as shown in FIG. 5(a), in a driving process of the vehicle, at a sudden-change location (for example, the first location), a driver usually decelerates in advance. In this case, in response to the user operation, the vehicle control unit controls the first wheel (for example, a rear wheel of the vehicle) to increase negative torque, to trigger energy regeneration.

The first location is a sudden-change location whose geomorphological feature satisfies a preset condition. For example, the first location is a speed bump, a road joint, or a road surface bump.

In this way, when determining that the vehicle is in the energy regeneration scenario, the vehicle control unit determines, according to the following step, whether the wheel subsequently passes over the sudden-change location, to stabilize, through torque control, the vehicle braking force in a process in which the vehicle passes over the sudden-change location.

It should be understood that in this embodiment of this application, a torque control process in which the vehicle is in the energy regeneration scenario is used as an example to describe the torque control method. The torque control method may also be applied to a non-energy regeneration scenario. Details are not described in this embodiment of this application.

In some embodiments, the vehicle control unit can predict, based on the obtained detection data, that the wheel is to pass over the first location. Optionally, the vehicle control unit determines, based on the detection data in a process in which a second wheel (for example, a front wheel of the vehicle) passes over the first location or before the second wheel passes over the first location, that the first wheel is to arrive at the first location.

For example, after obtaining the detection data such as a wheel speed and acceleration that are detected by the inertia measurement unit 122 in the sensor system 120 shown in FIG. 3B, the vehicle control unit determines, based on a speed change, that the second wheel is passing over the first location. In this case, the vehicle control unit may determine that the first wheel is to arrive at the first location.

For another example, the radar 123 in the sensor system 120 may sense an object in a surrounding environment of the vehicle 100 by using a radio signal. Alternatively, the lidar 124 in the sensor system 120 may sense, by using a laser, an object in an environment in which the vehicle 100 is located. Alternatively, the camera 125 in the sensor system 120 may be configured to capture a plurality of images of the surrounding environment of the vehicle 100. In this case, the vehicle control unit may identify, based on the obtained detection data, an object in the surrounding environment of the vehicle 100, and determine whether the first location exists, to determine, before the second wheel passes over the first location, that the first wheel is to arrive at the first location.

In this way, the vehicle control unit determines, based on the detection data, that the wheel is to pass over the sudden-change location, to determine that a torque transfer condition is satisfied, and torque control is to be started. This avoids a decrease in the vehicle braking force due to torque control in a process in which the wheel passes over the sudden-change location subsequently.

Optionally, the torque transfer condition includes, for example, determining one or more of the following based on the detection data: the vehicle is to pass over the first location, the vehicle is in an energy regeneration working condition, and the vehicle speed satisfies a preset threshold.

For example, the vehicle control unit determines, based on the detection data, that the vehicle is in the energy regeneration working condition and the first wheel is to pass over the first location. In this case, it may be determined that the torque transfer condition is satisfied.

For another example, when the vehicle speed is low, the vehicle control unit does not trigger an energy regeneration working condition. In this case, after determining, based on the detection data, that the vehicle speed is greater than the preset threshold, the vehicle control unit determines that the vehicle is in the energy regeneration working condition, and the first wheel is to pass over the first location, and may determine that the torque transfer condition is satisfied.

In some embodiments, when determining that the first wheel is to arrive at the first location, the vehicle control unit may predict a time point at which the first wheel arrives at the first location. For example, the vehicle control unit predicts, based on the detection data, that the first wheel arrives at the first location after the first time period.

Optionally, the vehicle control unit predicts, based on at least one of the vehicle wheelbase, the vehicle speed, the vehicle acceleration, the vehicle traveling direction, and the vehicle track width that are indicated by the detection data, that the first wheel arrives at the first location after the first time period.

For example, the vehicle control unit predicts, based on a wheelbase between the first wheel and the second wheel (that is, a wheelbase between the front wheel and the rear wheel), the vehicle speed, and the vehicle acceleration, the time point at which the first wheel arrives at the first location.

For another example, the first location is a speed bump, and the vehicle does not travel forward toward the speed bump. In this case, when predicting the time point at which the first wheel arrives at the first location, the vehicle control unit further needs to obtain a more accurate first time period with reference to the vehicle traveling direction and the vehicle track width.

In this way, the vehicle control unit obtains, based on the detection data, the time point at which the first wheel is to arrive at the first location, to complete, by using the following step, torque transfer between different wheels before the time point, and ensure traveling stability of the vehicle.

S403: The vehicle control unit adjusts current first torque of the first wheel to second torque, and adjusts current third torque of the second wheel to fourth torque in the first time period, where a first absolute value of a difference between the first torque and the second torque is equal to a second absolute value of a difference between the third torque and the fourth torque.

In some embodiments, after detecting the first location and predicting the first time period, the vehicle control unit may obtain a torque transfer amount of the first wheel based on at least one of the vehicle speed, the braking force magnitude, and the road surface sudden change degree corresponding to the first location that are indicated by the detection data. The torque transfer amount is torque that is to be transferred between different wheels in a torque transfer process. In some examples, the torque transfer process may also be described as a torque compensation process, and the torque transfer amount may also be described as a torque compensation amount.

For example, a faster vehicle speed indicates a larger torque transfer amount. For another example, a larger braking force indicates a larger braking force lost when the wheel passes over the first location, and a larger torque transfer amount is required. For another example, a larger road surface sudden change degree indicates a larger wheel lift-off height, and a larger torque transfer amount is required.

In some examples, in the torque transfer process, as time changes in the first time period, the vehicle control unit adjusts the current first torque of the first wheel to the second torque based on a first torque transfer curve, and adjusts the current third torque of the second wheel to the fourth torque based on a second torque transfer curve. An adjustment direction of the first torque transfer curve corresponds oppositely to an adjustment direction of the second torque transfer curve. Optionally, corresponding oppositely of the adjustment direction indicates that negative torque of the rear wheel is decreased when negative torque of the front wheel is increased.

For example, in a vehicle traveling scenario shown in FIG. 5(a), the vehicle includes a first actuator and a second actuator. The two actuators are respectively configured to control front axle torque (corresponding to torque of two front wheels) and rear axle torque (corresponding to torque of two rear wheels) of the vehicle. For example, the first actuator controls torque of a rear wheel (for example, the first wheel) of the vehicle, and the second actuator controls torque of a front wheel (for example, the second wheel) of the vehicle. Optionally, the first actuator or the second actuator is any one of an electronic hydraulic brake, an electronic mechanical brake, or a drive motor.

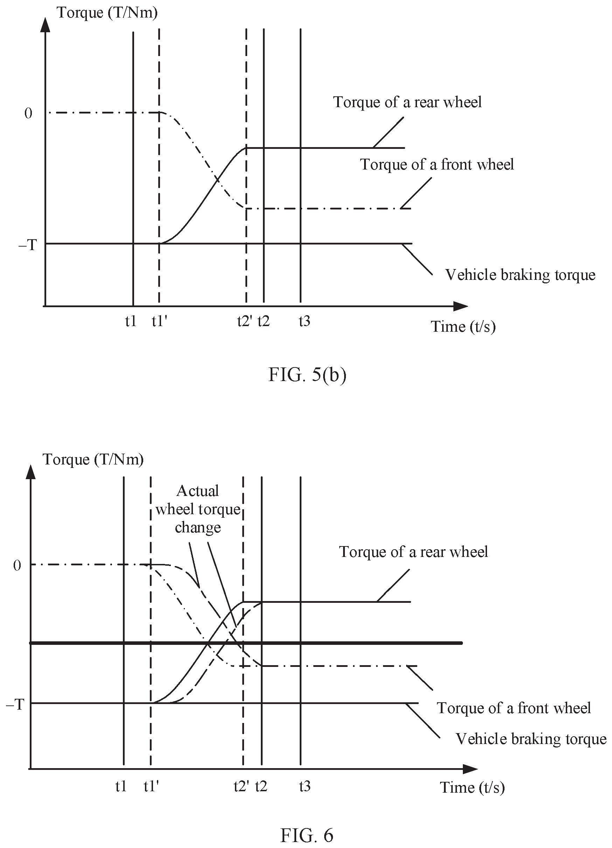

Currently, the vehicle is in the energy regeneration scenario. At a time point t1, the vehicle enters for the first time or is to enter a sudden-change location (for example, the first location). As shown in FIG. 5(b), torque of the front wheel of the vehicle is 0, and torque of the rear wheel of the vehicle is -T. Then, the vehicle control unit determines, at a time point t1' based on the detection data, that the front wheel of the vehicle enters the sudden-change location. In this case, the torque transfer condition of the rear wheel of the vehicle is currently satisfied, and torque transfer between the front wheel of the vehicle and the rear wheel of the vehicle is to be performed. It should be understood that there is a time interval between the time point t1' and the time point t1, or the time point t1' and the time point t1 are the same. In this case, the vehicle control unit predicts a time (for example, a time point t2') at which the rear wheel of the vehicle is to arrive at the sudden-change location and a required torque transfer amount. Then, as shown in FIG. 5(a), between the time point t1' and the time point t2', the vehicle control unit controls, by using the first actuator, the rear wheel of the vehicle to increase the negative torque, and controls, by using the second actuator, the front wheel of the vehicle to decrease the negative torque. It should be understood that, as shown in FIG. 5(b), because the negative torque is changed, the negative torque of the rear wheel of the vehicle is increased, and an absolute value of torque of the rear wheel of the vehicle is decreased; and the negative torque of the front wheel of the vehicle is decreased, and an absolute value of torque of the front wheel of the vehicle is increased.

Between the time point t1' and the time point t2', the vehicle control unit controls the torque of the rear wheel of the vehicle and the torque of the front wheel of the vehicle to change steadily based on the first torque transfer curve and the second torque transfer curve, to implement torque transfer. At any time point in this process, compared with torque at the torque transfer start point, the time point t1', an absolute value of a torque change difference of the rear wheel of the vehicle is the same as or similar to an absolute value of a torque change difference of the front wheel of the vehicle. At the time point t2', the vehicle control unit completes torque transfer of the front wheel and the rear wheel of the vehicle. It should be understood that specific types of the first torque transfer curve and the second torque transfer curve are not limited in this embodiment of this application. There is a time interval between a time point t2 and the time point t2', or the time point t2 and the time point t2' are the same. In this way, in the torque transfer process, torque transfer is performed smoothly based on a torque transfer curve, to avoid a sudden torque change and impact on driving experience of a user.

Then, as shown in FIG. 5(a), at the time point t2, the rear wheel of the vehicle starts to enter the sudden-change location, and at a time point t3, the rear wheel of the vehicle leaves the sudden-change location. In this case, as shown in FIG. 5(b), between the time point t2 and the time point t3, negative torque applied to the rear wheel when the vehicle is passing over the sudden-change location is greater than the negative torque applied before the front wheel of the vehicle enters the sudden-change location (that is, the absolute value of the torque is decreased), so that the slip rate is reduced by adjusting the torque of the wheel that passes over the sudden-change location. In addition, the negative torque of the rear wheel of the vehicle is transferred to the front wheel of the vehicle, to ensure unchanged vehicle braking torque, so that the vehicle does not lurch/surge forward due to a decrease in the vehicle braking torque after the wheel makes contact with the ground again upon leaving the sudden-change location.

In this way, the vehicle control unit predicts a time point at which a wheel is to pass over the sudden-change location, and completes torque transfer between different wheels before the time point, so that a slip rate in a process in which the wheel passes over the sudden-change location is reduced, and the vehicle does not lurch/surge forward after the wheel makes contact with the ground again upon leaving the sudden-change location. In this way, a driver and a passenger pass over the sudden-change location imperceptibly, and this improves comfort experience of the driver and the passenger.

In this embodiment of this application, the torque control method provided in this embodiment of this application is described by using an example in which the first wheel is a rear wheel of the vehicle, the second wheel is a front wheel of the vehicle, the detection data corresponding to the front wheel of the vehicle is used to predict that the rear wheel of the vehicle is to pass over the first location, and stable control of vehicle braking force is implemented through torque transfer between the front wheel of the vehicle and the rear wheel of the vehicle. It should be understood that the first wheel may also broadly indicate a wheel that is to pass over the first location, and the second wheel may also broadly indicate a wheel other than the first wheel. The vehicle control unit implements stable control of the vehicle braking force through torque transfer between the wheel that is to pass over the first location and the another wheel. Details are not described below again. For example, alternatively, before the front wheel of the vehicle passes over the sudden-change location, a slip rate of the front wheel of the vehicle may also be reduced through torque transfer between the front wheel of the vehicle and the rear wheel of the vehicle.

In addition, in this embodiment of this application, the torque control method provided in this embodiment of this application is described by using an example in which the vehicle includes four wheels and is configured with the first actuator configured to control the rear axle torque and the second actuator configured to control the front axle torque. It should be understood that the first actuator may also broadly indicate an actuator configured to control torque of a wheel that is to pass over the first location, and the second actuator may also broadly indicate an actuator configured to control torque of a wheel other than the wheel that is to pass over the first location. In addition, more or fewer actuators may be arranged in the vehicle. Details are not described below.

In some embodiments, the vehicle control unit starts to perform torque transfer when predicting a time point at which the wheel is to enter the first location and obtaining the torque transfer amount. In some examples, the vehicle control unit completes torque transfer before the wheel enters the first location. In some examples, the vehicle control unit completes torque transfer before the wheel leaves the first location. In the two implementations, the slip rate can be reduced, and the vehicle does not lurch/surge forward.

In some embodiments, when the wheel leaves the first location, both the front wheel and the rear wheel of the vehicle maintain the torque values obtained after torque transfer. Then, in a traveling process, the vehicle control unit adjusts wheel torque in response to an operation of triggering the accelerator pedal or the brake pedal by the user. Alternatively, the wheel torque is automatically restored in the traveling process of the vehicle. For example, as shown in FIG. 5(b), after the time point t3, the front wheel and the rear wheel of the vehicle maintain the torque values obtained after torque transfer. Then, in the traveling process, the torque of the front wheel of the vehicle is restored to 0, and the torque of the rear wheel of the vehicle is restored to -T. The vehicle braking torque remains unchanged or changes slightly, and driving experience of the driver is not affected.

In some embodiments, the vehicle control unit indicates an actuator to adjust wheel torque. In an actual operation, the actuator requires specific response time to complete wheel torque adjustment. Therefore, the vehicle control unit needs to trigger the actuator in advance based on the response time for torque adjustment, to ensure that the wheel torque is adjusted on time.

Optionally, different wheels may correspond to different actuator types or models, and different actuator types or models have different response time. Therefore, the vehicle control unit may trigger different actuators in advance to adjust the torque at different time.

For example, as shown in torque change curves in FIG. 6, in a torque transfer process, at a same time point, absolute values of torque change differences of actual torque of the front wheel of the vehicle and actual torque of the rear wheel of the vehicle are required to be the same. In this case, to ensure that actual torque satisfies a requirement, in the torque adjustment process, a calculated theoretical torque transfer curve is shifted forward in terms of time. In addition, if a type or a model of the first actuator is different from that of the second actuator, at a same time point, absolute values of theoretical torque change differences of the front wheel torque of the vehicle and the rear wheel torque of the vehicle are not necessarily the same. In this way, torque transfer between different wheels is triggered based on the calculated theoretical torque transfer curve, so that an actual torque transfer curve can meet a requirement that the vehicle braking torque remains unchanged or approximately remains unchanged.

In this way, the vehicle control unit performs torque transfer based on actual working performance of the actuator and with reference to the calculated first time period and torque transfer amount, to achieve a better torque transfer effect.

In some embodiments, long response time is required after an actuator is triggered to start. In this case, if the vehicle control unit triggers the actuator to perform torque transfer at the time point t1', it may be difficult to complete torque transfer before the wheel leaves the first location. Alternatively, if the first actuator is different from the second actuator, and a response time difference between the first actuator and the second actuator is excessively large, it is difficult to ensure that absolute values of torque transfer amounts of wheels corresponding to the two actuators are the same in the torque transfer process. Consequently, the vehicle braking torque changes, and driving experience of a user is affected. Therefore, the vehicle control unit can pre-activate an actuator with slow torque compensation, so that in a subsequent torque transfer process, the activated actuator can respond to torque transfer quickly.

In some examples, when the first actuator is different from the second actuator, an actuator with slow torque compensation in the first actuator or the second actuator is pre-activated. For example, the first actuator is a drive motor, the second actuator is a hydraulic brake, and torque compensation of the hydraulic brake is slow. Then, the vehicle control unit may pre-activate the hydraulic brake.

In some examples, after determining to enter the energy regeneration scenario, the vehicle control unit pre-activates an actuator with slow torque compensation. Alternatively, after detecting the first location, the vehicle control unit pre-activates an actuator with slow torque compensation.

In some embodiments, in a process in which the wheel of the vehicle passes over the first location, due to some unpredictable accidents, a slip rate of the wheel may also be greater than a target value. In this case, the vehicle control unit can also transfer the torque of the wheel to reduce the slip rate and prevent a sudden change of the vehicle braking torque. The unpredictable accident is, for example, a water stain, an ice surface, an abnormal sudden change, or the like on a road surface of the first location, and cause an increase in the slip rate of the wheel.

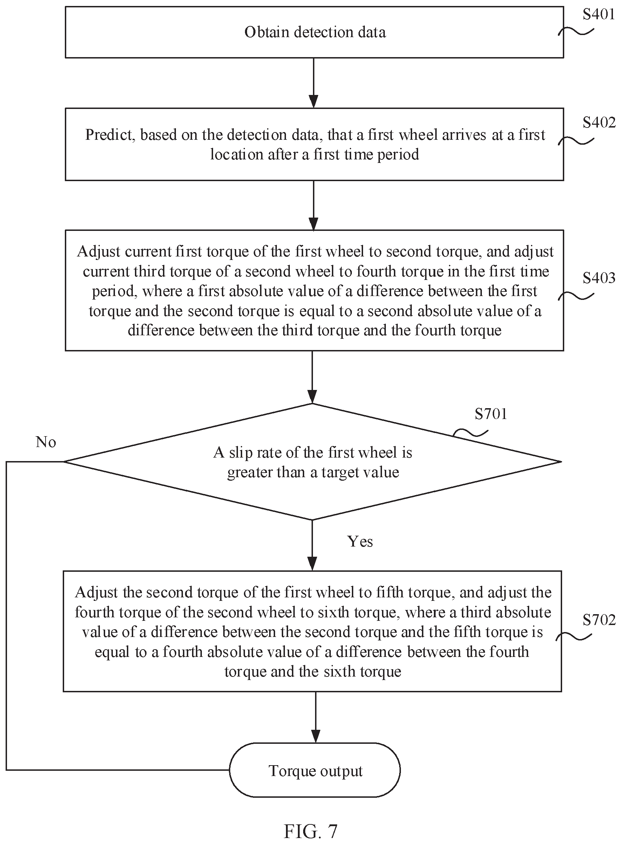

For example, FIG. 7 is a schematic flowchart of another torque control method according to an embodiment of this application. As shown in FIG. 7, after step S403, the method may further include step S701 and step S702.

S701: The vehicle control unit determines whether a slip rate of the first wheel is greater than a target value. If the slip rate of the first wheel is greater than the target value, step S702 is performed. If the slip rate of the first wheel is less than or equal to the target value, corresponding torque is output.

The target value is a target slip rate or a target slip rate change threshold that is obtained by the vehicle control unit based on one or more of a vehicle speed, a braking force magnitude, a road surface sudden change degree corresponding to the first location, and the like that are indicated by the detection data.

For example, in a process in which a wheel of the vehicle passes over the first location, the vehicle control unit monitors a slip rate of the wheel. If an actual slip rate of the wheel is greater than or equal to the target slip rate, the vehicle control unit may determine that the slip rate of the wheel is greater than the target value. Alternatively, if a difference between the actual slip rate and an estimated slip rate of the wheel is greater than or equal to the target slip rate change threshold, the vehicle control unit may determine that the slip rate of the wheel is greater than the target value.

In some embodiments, if the vehicle control unit determines that the slip rate of the first wheel is greater than the target value, the wheel torque needs to be adjusted, to reduce the slip rate, and avoid affecting driving experience of a user or causing a driving risk. That is, the following step S702 is performed. If the vehicle control unit determines that the slip rate of the first wheel is less than or equal to the target value, the vehicle control unit may not need to adjust the wheel torque.

S702: The vehicle control unit adjusts the second torque of the first wheel to fifth torque, and adjusts the fourth torque of the second wheel to sixth torque, where a third absolute value of a difference between the second torque and the fifth torque is equal to a fourth absolute value of a difference between the fourth torque and the sixth torque.

In some embodiments, with reference to the foregoing torque adjustment process, when determining that torque adjustment is to be performed, the vehicle control unit may also calculate a torque transfer amount, and perform transfer torque between different wheels based on the torque transfer amount, to reduce the wheel slip rate.

In some examples, in a process in which the first wheel passes over the first location, it is determined, whether the slip rate of the first wheel is greater than the target value. If the slip rate of the first wheel is greater than the target value, the second torque of the first wheel is adjusted to the fifth torque, and the fourth torque of the second wheel is adjusted to the sixth torque. The third absolute value of the difference between the second torque and the fifth torque is equal to the fourth absolute value of the difference between the fourth torque and the sixth torque. In this way, torque transfer between different wheels ensures that the vehicle braking torque remains unchanged or approximately remains unchanged, so that the vehicle does not lurch or surge forward.

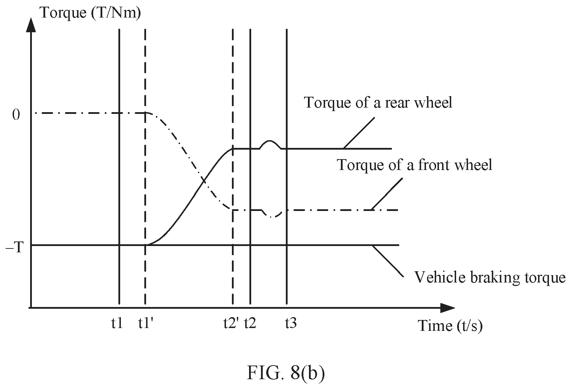

For example, as shown in FIG. 8(b), in a process from a time point t2 to a time point t3, a rear wheel (for example, the first wheel) of the vehicle passes over a sudden-change location (for example, the first location). If the vehicle control unit determines that a slip rate of the rear wheel of the vehicle is greater than the target value, the vehicle control unit may reduce regeneration strength of the rear wheel of the vehicle by increasing negative torque of the rear wheel of the vehicle, to reduce the slip rate of the rear wheel of the vehicle. The vehicle control unit stabilizes the vehicle braking force by decreasing negative torque of the front wheel, to increase regeneration strength of the front wheel.

In some examples, after torque transfer, the slip rate of the wheel of the vehicle is no longer greater than the target value. Then, the vehicle control unit may trigger torque restoration of the wheel. A time point for triggering restoration may be between the time point t2 and the time point t3, or may be after the time point t3. Correspondingly, a time point for completing torque restoration may be between the time point t2 and the time point t3, or may be after the time point t3. Optionally, restored torque is torque obtained when the wheel enters the first location.

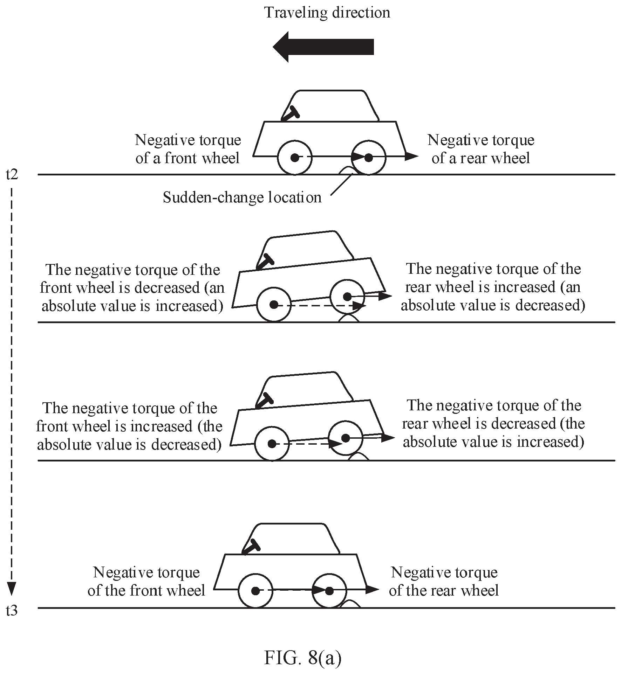

For example, as shown in FIG. 8(a), after the rear wheel of the vehicle enters the sudden-change location (for example, the first location) at the time point t2, in a process of passing over the sudden-change location, the vehicle control unit determines that the slip rate of the rear wheel of the vehicle is greater than the target value. In this case, the vehicle control unit indicates the first actuator and the second actuator to increase negative torque of the rear wheel of the vehicle (an absolute value is decreased) and decrease negative torque of the front wheel of the vehicle (an absolute value is increased) based on torque transfer curves shown in FIG. 8(b), to reduce the slip rate of the rear wheel of the vehicle. Then, when the slip rate of the rear wheel of the vehicle is less than or equal to the target value, the negative torque of the rear wheel of the vehicle is decreased (the absolute value is increased), and the negative torque of the front wheel of the vehicle is increased (the absolute value is decreased), to restore the wheel torque. In addition, in the entire torque transfer process, the vehicle braking torque remains unchanged, to ensure traveling stability of the vehicle when the rear wheel makes contact with the ground again upon leaving the sudden-change location.

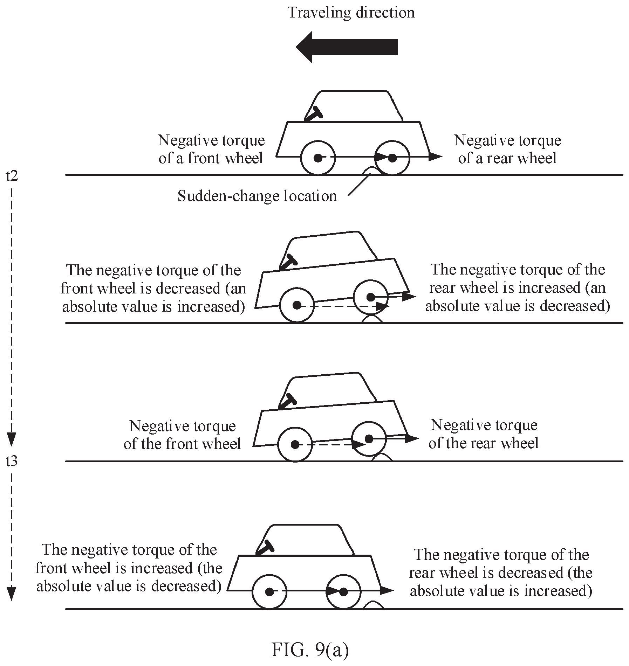

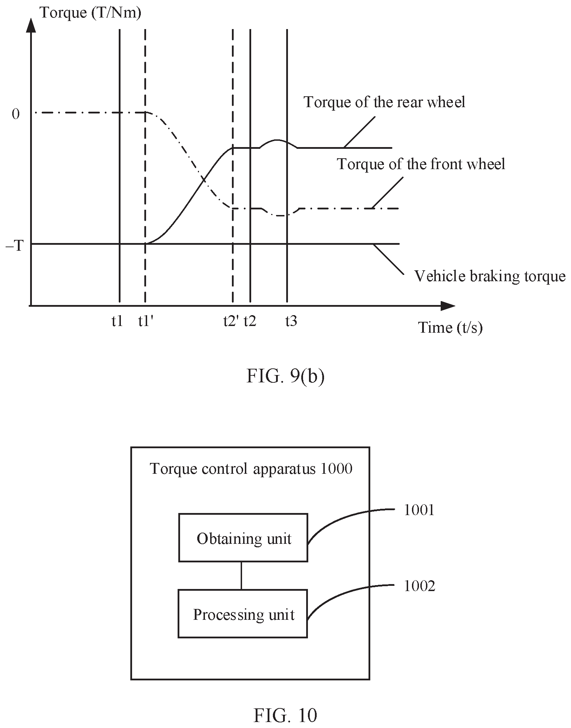

For another example, compared with the scenario shown in FIG. 8(a) and FIG. 8(b), the vehicle control unit completes torque restoration before the time point t3. As shown in FIG. 9(a) and FIG. 9(b), in a process in which the rear wheel passes over the sudden-change location, the vehicle control unit adjusts the wheel torque. In addition, after the time point t3, restoration of the wheel torque is completed.

It should be understood that, as described above, specific response time is required for the actuator to adjust the torque. In this case, in a process in which the wheel passes over the first location, there is a specific deviation between an actual torque transfer curve and the torque transfer curves shown in FIG. 8(b) or FIG. 9(b). This is not described by using an example.

In this way, the vehicle control unit can complete torque transfer before the wheel leaves the sudden-change location, to ensure stability of the vehicle braking force when the slip rate is reduced. In addition, in a process in which the wheel passes over the sudden-change location, if the slip rate increases, a vehicle control unit may also adaptively perform torque transfer, to reduce the slip rate, and ensure stability of the vehicle braking force through torque transfer between different wheels. In this way, traveling stability of the vehicle can be ensured before the vehicle passes over the sudden-change location, in the process of passing over the sudden-change location, and after the vehicle passes over the sudden-change location, thereby improving comfort experience of the driver and the passenger.

The foregoing describes the torque control method provided in embodiments of this application by using a scenario in which the vehicle travels in a forward direction as an example. It should be understood that the torque control method provided in embodiments of this application is also applicable to a vehicle reversing scenario. For a specific implementation, refer to the method in embodiments of the foregoing examples. For example, in a vehicle reversing process, the vehicle control unit determines that a wheel is to pass over a sudden-change location, may also reduce a slip rate through torque transfer between different wheels, so that the vehicle does not lurch/surge backward after the wheel makes contact with the ground again.

The foregoing mainly describes the solutions provided in embodiments of this application from the perspective of the methods. To implement the foregoing functions, corresponding hardware structures and/or software modules for performing the functions are included. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this embodiment of this application, the torque control system may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

FIG. 10 is a possible diagram of a structure of a torque control apparatus in the foregoing embodiments. As shown in FIG. 10, the torque control apparatus 1000 may include an obtaining unit 1001 and a processing unit 1002. The torque control apparatus 1000 is configured to perform the foregoing torque control method, for example, is configured to perform the torque control method shown in FIG. 4 or FIG. 7. Certainly, the torque control apparatus may further include another module, or the torque control apparatus may include fewer modules. This is not limited in embodiments of this application.

The obtaining unit 1001 is configured to obtain detection data.

Specifically, the obtaining unit 1001 is configured to perform step S401 shown in FIG. 4. For example, the obtaining unit 1001 is configured to obtain data such as a vehicle speed, a braking force magnitude, a road surface sudden change degree, a vehicle wheelbase, the vehicle speed, a vehicle acceleration, a vehicle traveling direction, and a vehicle track width.

The processing unit 1002 is configured to predict, based on the vehicle detection data, a time at which a wheel arrives at a sudden-change location, and perform torque transfer between different wheels. For example, the processing unit 1002 is configured to perform step S402 and step S403 shown in FIG. 4. Alternatively, the processing unit 1002 is configured to perform torque transfer between different wheels based on the vehicle detection data in a process in which the wheel passes over the sudden-change location. For example, the processing unit 1002 is configured to perform step S701 and step S702 shown in FIG. 7.

Optionally, the torque control apparatus 1000 shown in FIG. 10 may further include a storage unit (not shown in FIG. 10), and the storage unit stores a program or instructions. When the obtaining unit 1001 and the processing unit 1002 execute the program or the instructions, the torque control apparatus 1000 shown in FIG. 10 can perform the torque control method in the foregoing method embodiments.

Operations and/or functions of the units in the torque control apparatus 1000 are separately intended to implement corresponding procedures of the torque control method in the foregoing method embodiments. All related content of the steps in the foregoing method embodiments may be cited in function descriptions of corresponding functional units. For brevity, details are not described herein again.

For a technical effect of the torque control apparatus 1000 shown in FIG. 10, refer to the technical effect of the torque control method in the foregoing method embodiments. Details are not described herein again.

For example, with reference to FIG. 3A, functions implemented by the obtaining unit 1001 and the processing unit 1002 in the torque control apparatus 1000 may be implemented by the processor 101 in FIG. 3A by executing the program code in the memory 103 in FIG. 3A.

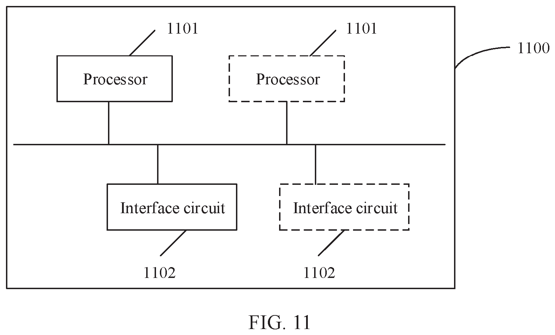

An embodiment of this application further provides a chip system. As shown in FIG. 11, the chip system 1100 includes at least one processor 1101 and at least one interface circuit 1102. In an example, when the chip system 1100 includes one processor and one interface circuit, the processor may be a processor 1101 shown in a solid line box (or a processor 1101 shown in a dashed line box) in FIG. 11, and the interface circuit may be an interface circuit 1102 shown in a solid line box (or an interface circuit 1102 shown in a dashed box) in FIG. 11. When the chip system 1100 includes two processors and two interface circuits, the two processors include the processor 1101 shown in the solid line box and the processor 1101 shown in the dashed line box in FIG. 11, and the two interface circuits include the interface circuit 1102 shown in the solid line box and the interface circuit 1102 shown in the dashed line box in FIG. 11. This is not limited herein.

The processor 1101 and the interface circuit 1102 may be interconnected through a line. For example, the interface circuit 1102 may be configured to receive a signal. For another example, the interface circuit 1102 may be configured to send a signal to another apparatus (for example, the processor 1101). For example, the interface circuit 1102 may read instructions stored in a memory, and send the instructions to the processor 1101. When the instructions are executed by the processor 1101, the torque control apparatus performs the steps in the foregoing embodiments. Certainly, the chip system may further include another discrete component. This is not specifically limited in this embodiment of this application.

For example, the chip system may be a field programmable gate array (field programmable gate array, FPGA), an application specific integrated circuit (application specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium that stores one or more computer programs. The one or more computer programs include instructions. When the instructions are executed by a computer, the computer is enabled to perform a corresponding procedure of the torque control method in the foregoing embodiments.

In some embodiments, the disclosed methods may be implemented as computer program instructions encoded in a machine-readable format on a computer-readable storage medium or encoded on another non-transitory medium or product.

An embodiment of this application further provides a computer program product. When the computer program product runs on a computer, the computer is enabled to perform the foregoing related steps, to implement the torque control method in the foregoing embodiments.

The apparatus, the computer-readable storage medium, the computer program product, or the chip provided in embodiments of this application is configured to perform the corresponding method provided above. Therefore, for beneficial effect that can be achieved, refer to beneficial effect in the corresponding method provided above, and details are not described herein again.

Methods or algorithm steps described in combination with the content disclosed in this embodiment of this application may be implemented by hardware, or may be implemented by a processor by executing a software instruction. The software instructions may include a corresponding software module. The software module may be stored in a random access memory (random access memory, RAM), a flash memory, a read-only memory, an erasable programmable read-only memory (erasable programmable read-only memory, EPROM), an electrically erasable programmable read-only memory (electrically erasable programmable read-only memory, EEPROM), a register, a hard disk, a removable hard disk, a compact disc read-only disk (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

Based on the descriptions of the foregoing implementations, a person skilled in the art can clearly understand that, for ease and brevity of description, division into the foregoing functional modules is merely an example for description. During actual application, the foregoing functions may be allocated to different functional modules for implementation according to a requirement. To be specific, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed methods may be implemented in other manners. The apparatus embodiment described above is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in an electronic form, a mechanical form, or another form.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A torque control method, wherein the method comprises:
obtaining detection data;
predicting, based on the detection data, that a first wheel arrives at a first location after a first time period, wherein a geomorphological feature of the first location satisfies a preset condition; and
adjusting current first torque of the first wheel to second torque, and adjusting current third torque of a second wheel to fourth torque in the first time period, wherein a first absolute value of a difference between the first torque and the second torque is equal to a second absolute value of a difference between the third torque and the fourth torque, and the first wheel and the second wheel correspond to different actuators.

2. The method according to claim 1, wherein the method further comprises:
in a process in which the first wheel passes over the first location, determining, whether a slip rate of the first wheel is greater than a target value; and
if the slip rate of the first wheel is greater than the target value, adjusting the second torque of the first wheel to fifth torque, and adjusting the fourth torque of the second wheel to sixth torque, wherein a third absolute value of a difference between the second torque and the fifth torque is equal to a fourth absolute value of a difference between the fourth torque and the sixth torque.

3. The method according to claim 1 or 2, wherein adjusting the current first torque of the first wheel to the second torque, and adjusting the current third torque of the second wheel to the fourth torque in the first time period comprises:
as time changes in the first time period, adjusting the current first torque of the first wheel to the second torque based on a first torque transfer curve, and adjusting the current third torque of the second wheel to the fourth torque based on a second torque transfer curve, wherein an adjustment direction of the first torque transfer curve corresponds oppositely to an adjustment direction of the second torque transfer curve.

4. The method according to any one of claims 1 to 3, wherein before predicting, based on the detection data, that the first wheel arrives at the first location after the first time period, the method further comprises:
determining, based on the detection data, that a current scenario is an energy regeneration scenario, wherein the energy regeneration scenario comprises a deceleration scenario in response to a user operation or an automatic deceleration scenario.

5. The method according to any one of claims 1 to 4, wherein after obtaining the detection data, the method further comprises:
obtaining a torque transfer amount of the first wheel based on at least one of a vehicle speed, a braking force magnitude, and a road surface sudden change degree corresponding to the first location that are indicated by the detection data, wherein the torque transfer amount is equal to the first absolute value.

6. The method according to any one of claims 1 to 5, wherein predicting, based on the detection data, that the first wheel arrives at the first location after the first time period comprises:
predicting, based on at least one of a vehicle wheelbase, the vehicle speed, a vehicle acceleration, a vehicle traveling direction, and a vehicle track width that are indicated by the detection data, that the first wheel arrives at the first location after the first time period.

7. The method according to any one of claims 1 to 6, wherein a first actuator is configured to control torque of the first wheel, the second actuator is configured to control torque of the second wheel, and after obtaining the detection data, the method further comprises:
when the first actuator is different from the second actuator, pre-activating an actuator with slow torque compensation in the first actuator or the second actuator.

8. The method according to claim 7, wherein the first actuator or the second actuator is any one of an electronic hydraulic brake, an electronic mechanical brake, or a drive motor.

9. The method according to any one of claims 1 to 8, wherein after obtaining the detection data, the method further comprises:
determining, based on the detection data, that the first wheel is to arrive at the first location in a process in which the second wheel passes over the first location or before the second wheel passes over the first location.

10. A torque control apparatus, comprising a processor and a memory, wherein the memory is coupled to the processor, the memory is configured to store computer-readable instructions, and when the processor reads the computer-readable instructions from the memory, the torque control apparatus is enabled to perform the method according to any one of claims 1 to 9.

11. A vehicle, wherein the vehicle comprises the vehicle and the torque control apparatus according to claim 10.

12. A chip system, comprising at least one processor and at least one interface circuit, wherein the at least one interface circuit is configured to: perform a transceiver function and send instructions to the at least one processor, and when the at least one processor executes the instructions, the at least one processor is enabled to perform the method according to any one of claims 1 to 9.

13. A computer-readable storage medium, wherein the computer-readable storage medium comprises a computer program, and when the computer program is run on a computer, the computer is enabled to perform the method according to any one of claims 1 to 9.

14. A computer program product, wherein when the computer program product runs on a computer, the computer is enabled to perform the method according to any one of claims 1 to 9.
